# EUROPEAN PATENT APPLICATION

(11) **EP 3 845 416 A1**
(43) Date of publication of application: **07.07.2021**
(21) Application number: 18931937.9
(22) Date of filing: 25.10.2018
(51) Int. Cl.: B60P 7/13, B65D 88/12, B65D 90/00

(54) **CONTAINER BINDING DEVICE**

(30) Priority: 28.08.2018 KR 20180101114
(71) Applicant: Han, Kwanghee, Busan 46721 (KR); Cho, Jaemin, Busan 46721 (KR)
(72) Inventor: Han, Kwanghee, Busan 46721 (KR); Cho, Jaemin, Busan 46721 (KR)
(74) Representative: Lahrtz, Fritz
(86) International application number: PCT/KR2018/012749
(87) International publication number: WO 2020/045736

(57) **Abstract**

The present invention relates to a container binding device which enables a locking or unlocking operation to be smoothly performed when loading or unloading a container so as to reduce inconvenience of a driver, improve work efficiency, and secure reliability. The container binding device comprises: at least four locking assemblies arranged in two rows along the longitudinal direction on an upper frame of a trailer and fastened or unfastened to a binder of the container; a guide assembly connected to the locking assemblies arranged in two rows along the longitudinal direction on an upper frame or a trailer and fastened unfastened to a binder of the container; a guide assembly connected to the locking assemblies in an interlocking manner, and guiding a fastening or unfastening operation of the locking assemblies; and a driving assembly arranged at the central portion of the width of the upper frame so as to drive the guide assembly.

## Description

### [Field of Invention]

The present invention relates to a container binding device, and more particularly, to a container binding device that smoothly locks or unlocks a container during loading or unloading, thereby eliminating inconvenience of a driver, improving work efficiency and securing reliability.

### [Background of Invention]

In general, a container is a case or vessel at a certain size to carry a large amount of cargo made for land transport or maritime transport as a kind of transportation container, and refers to a loading box for safe and convenient transportation of cargo. Further, this may also be a standardized port for bulk cargo.

Such containers are transported over land by container vehicles, and in the case of sea, large containers are transported using large container ships for loading the same.

As a means of transporting containers by land,vehicles called trailers are used. The trailer is generally driven by a tractor without any driving power device or controller.

The trailer is designed to fit a size of the container so that the standardized container can be loaded, and is also designed in consideration of the weight of cargo in the container. The trailer designed as described above is typically equipped with one or two containers, which will prevent the container from leaving the trailer upon sudden braking, curves, ramps or other unexpected situations during transportation. Further, in order to prevent falling, a locking device for fixing the container is installed at the top.

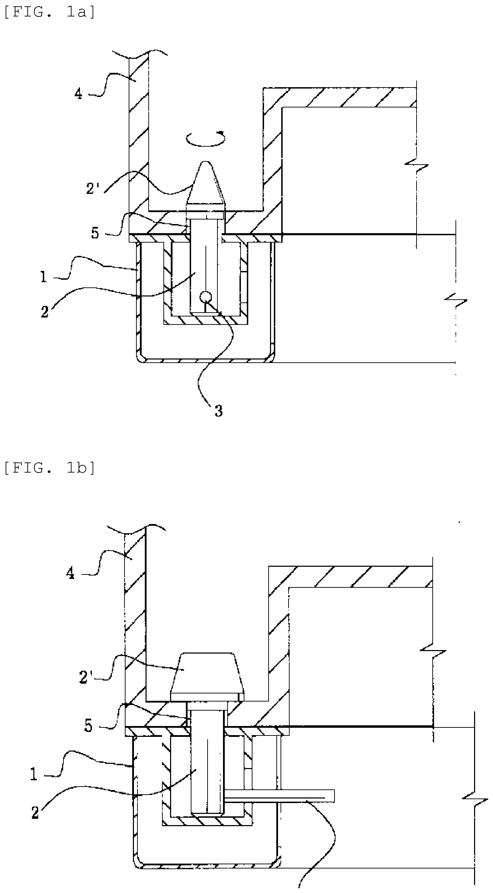

FIGS. 1a and 1b are cross-sectional views illustrating a state before and after operation of a manual locking device according to the prior art.

The manual locking device according to the prior art, as shown in FIGS. 1a and 1b, is provided with lockers to be locked or unlocked in multiple portions of an upper frame provided in the trailer due to rotation and lifting actions of a lever 3. In a state in which the container is mounted at a predetermined position of upper frame 1, when a driver operates the lever 3 of the locker 2, a head part 2' provided on a top end of the locker 2 is inserted into and fastened to a coupling hole 5 formed on the bottom of the container.

That is, the manual locking device integrally binds a trailer and a container loaded thereon so as to implement a function of securing stability during transportation.

However, most drivers often operate without locking due to cumbersome operation of the locking device while the container is loaded. Especially, if the trailer is driven without locking the container on roads or sharp curves with poor road surface, tragic accidents such as the container falling over or falling off of the trailer may occur.

In order to solve the above problems, an automatic locking device has been proposed as disclosed in Korean Utility Model Publication No. 20-0186762.

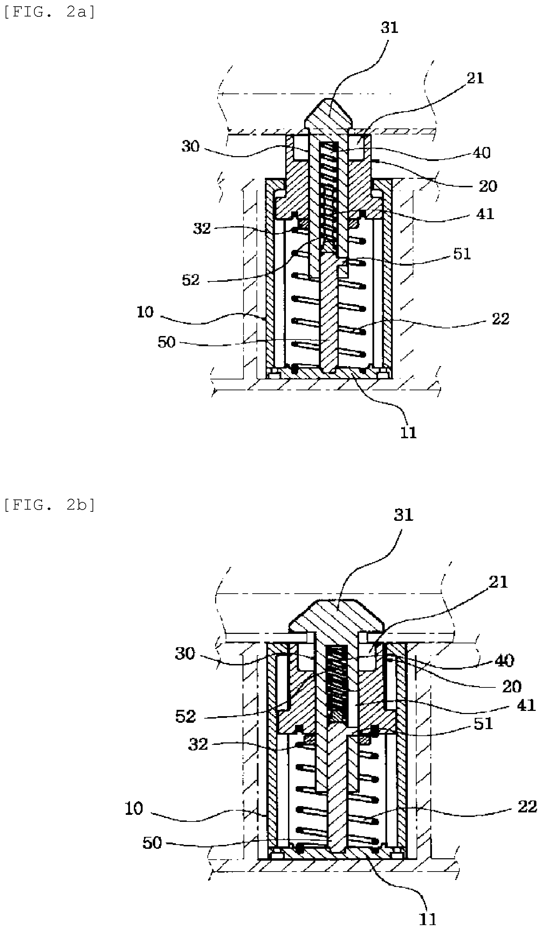

FIGS. 2a and 2b are cross-sectional views illustrating the states before and after operation of the automatic locking device according to the prior art.

The automatic locking device according to the prior art, as shown in FIGS. 2a and 2b, includes: an actuator 20 installed inside a housing 10 consisting of a cylindrical body mounted on the upper frame of the trailer, and having a hollow portion 21 lifted upward by elasticity of an elastic spring 22 and load of the outside; a locker 30 installed coaxially to the hollow portion 21 of the actuator 20, which is provided with a head member 31 inserted and fastened into a container, as well as a locking sill 32 to interlock with the actuator 20 while being in contact with the same; a tubular groove 40 formed inside the locker 30 at a predetermined depth from the bottom toward an upper portion of the locker, which is provided with a slit groove 41 having a curved surface to guide the locker 30 to rotate in a predetermined range when the locker 30 moves downward; a support shaft 50 fixed on a cover 11 coupled to the bottom of a housing 10 in order to slide freely the support shaft via an elastic spring 52 inside of the tubular groove 40; and a pin 51 provided at the periphery of an upper end of the support shaft 50 to change a direction of the locker 30 lifted up and down along the slit groove 41 with respect to a fixed axis, that is, a position at which the pin is inserted into the slit groove 41.

In other words, the automatic locking device can be automatically locked and unlocked by its own weight in a process of loading or unloading the container, thereby transporting the heavy container in a securely locked state and further preventing inconvenience due to operation of the locker.

Meanwhile, according to the standard or specifications of the trailer, four to twelve locking devices may be mounted at regular intervals on the upper frame and, in the case of a trailer provided with six or more locking devices, the locking device used for fixing may depend on a size of the container to be loaded.

However, according to the prior art, the user has to manually and separately operate a plurality of locking devices to lock and unlock the same, causing a longer working time and deterioration in work efficiency. In particular, due to bothersome work, the trailer is sometimes driven without careful locking operation, which may entail a problem of causing tragic accidents.

In addition, even if the existing manual locking device is replaced by the automatic locking device, the manual locking device is entirely removed and the automatic locking device should be newly installed, causing a problem of incurring considerable replacement costs.

Moreover, the automatic locking device in the art entails a problem that loading and unloading of the container is not possible due to frequent failure, resulting in a significant loss of business as well as increase in repair costs.

Further, in order to eliminate a gap in height between the trailer and the container, a corner casting formed in front of the container is typically bound to a horizontal fastening device in the horizontal direction. According to the prior art, in order to lock or unlock the horizontal fastening device bound in the horizontal direction, such operations must be done manually and separately by a user, causing a longer working time and deterioration in work efficiency. Further, due to bothersome work, the trailer is sometimes driven without careful locking operation, which may entail a problem of causing tragic accidents.

### [Summary of Invention]

### [Technical Problem to be Solved]

In order to overcome the aforementioned problems derived from the background art, an object of the present disclosure is to provide an automatic container-binding device that enables a plurality of locking devices mounted on an upper frame of a trailer to be automatically locked and unlocked depending on whether a container is loaded or unloaded.

Further, another object of the present invention is to provide an automatic container-binding device that can be conveniently used by a driver and may save time for binding or releasing the container from a locking unit, thereby improving productivity.

Further, another object of the present invention is to provide an automatic container-binding device that can reduce replacement costs by automation of the existing manual locking device pre-installed on the upper frame of the existing trailer.

Further, another object of the present invention is to provide an automatic container-binding device that may easily switch an automatic locking device to a manual mode if the automatic locking device is inoperable due to failure or damage, thereby easily preventing operational loss in business due to not working.

Further, another object of the present invention is to provide an automatic container-binding device which is mounted on an upper frame of a trailer such that a horizontal fastening device fastened in the horizontal direction can be automatically locked or unlocked.

On the other hand, without being limited to the above-mentioned objects, other objects of the present invention not mentioned herein will be clearly understood from the following description.

### [Technical Solution]

In order to accomplish the above objects, according to embodiments of the present invention, there is provided an automatic container-binding device, including: at least four (4) locking assemblies arranged in two rows in a length direction on an upper frame of a trailer and fastened to or unfastened from a binder of a container; a guide assembly connected to the locking assemblies in an interlocking manner to induce fastening or unfastening operation of the locking assemblies; and a drive assembly disposed between the locking assemblies arranged in two rows in order to drive the guide assembly.

Preferably, each of the locking assemblies includes: a cylindrical body moving up and down; a head member formed at an upper end of the body and fastened to or unfastened from a binder formed in a vertical direction of the container along a rotation angle; a first locking unit protruding from one side of a lower end of the body to be grippable and having a rotary lever to adjust the rotation angle of the head member.

Preferably, the locking assembly further includes: a pin type fastening member fastened to or unfastened from a thru-hole formed in a corner casting of the container; and a second locking unit having a support block to slidingly and movably support the fastening member.

Preferably, the rotary lever is provided with a binding pin at an end thereof, which is inserted into and released from a binding hole formed at one end of the guide assembly, wherein the binding hole is extended in a length direction to facilitate insertion of the binding pin.

Preferably, the first locking unit further includes: a horizontal anti-pushing block surrounding a portion of the body while being spaced at a predetermined interval; at least one anti-rotation protrusion at an adjacent portion of the body and the head member; and an anti-rotation groove to be inserted into the corresponding anti-rotation protrusion on an upper portion of the horizontal anti-pushing block.

Preferably, the drive assembly includes: a drive wire disposed on the upper frame ina width direction, one end of which is bound to the guide assembly; and a drive member hinge-coupled to rotate while penetrating through a thickness portion of the upper frame, wherein a lower end is connected to the drive wire and an upper end protrudes to the upper portion of the upper frame.

Preferably, the drive member drives the locking assembly in a state in which the drive member is spaced in the width direction of the upper frame at a distance equal to a length of a link member, wherein the drive member and the locking assembly are spaced and arranged such that a distance therebetween becomes at least 1/2 of a width of the upper frame.

Preferably, the drive assembly includes: a pair of semi-automatic wires disposed in the width direction of the upper frame, one end of which is bound to the guide assembly; a drive member hinge-coupled while penetrating through the thickness portion of the upper frame, wherein a lower end is connected to the other end of the semi-automatic wire and an upper end protrudes to the upper portion of the upper frame; and a semi-automatic control roller provided to rotate in the center of the width of the upper frame, which includes a pair of wire fixing means disposed at both opposite positions around the periphery of the roller in order to fix the pair of semi-automatic wires, respectively.

Preferably, the semi-automatic wire disposed between the drive member and the semi-automatic control roller consists of a first semi-automatic wire and a second semi-automatic wire, and a length-variable tension control means is connected between the first semi-automatic wire and the second semi-automatic wire.

Preferably, the guide assembly further includes a first guide roller installed between the guide assembly and the semi-automatic control roller to guide and support the semi-automatic wire, wherein the first guide roller leads a direction of pulling and releasing the semi-automatic wire toward the width direction of the upper frame.

Preferably, the drive assembly includes: an automatic wire disposed in the width direction of the upper frame, one end of which is bound to the guide assembly; a drive link disposed in the center of the width of the upper frame in order to be orthogonal to the automatic wire and provided with a wire fixing means to fix the center of the automatic wire; and a drive motor that reciprocates the drive link in a length direction of the upper frame, thereby pulling and releasing the automatic wire.

Preferably, the guide assembly further includes a second guide roller installed between the guide assembly and the drive link to guide and support the automatic wire, wherein the second guide roller leads a direction of pulling and releasing the automatic wire in the width direction of the upper frame.

Preferably, the guide assembly includes: an actuator that is bound to the rotary lever of the first locking unit at one end and is connected to the wire at the other end (hereinafter, the "wire" is any one of the drive wire, the semi-automatic wire or the automatic wire, and the "wire" mentioned later is also interpreted in the same way); a fixing member fixed to the upper frame to be spaced apart from the actuator at a predetermined interval, and having a sliding hole, through which the other end of the actuator or the wire penetrates; and an elastic member interposed between the actuator and the fixing member to elastically support the actuator.

Preferably, the guide assembly includes: a rotating member that is bound to the rotary lever of the first locking unit at one end and is connected to the wire at the other end; a rotary shaft member for supporting one side of the rotating member in order to be rotatable at a predetermined radius in accordance with movement of the wire; a fixing member fixed to the upper frame to be spaced apart from the rotary shaft member at a predetermined interval, and having a sliding hole, through which the wire penetrates; and an elastic member interposed between the other end of the rotating member and the fixing member to elastically support the rotating member.

Preferably, the guide assembly includes a pressing member that is bound for pressing or releasing a fastening member of the second locking unit at one end and is connected to the wire at the other end; a rotary shaft member for supporting one side of the pressing member in order to be rotatable at a predetermined radius in accordance with movement of the wire; and an elastic member interposed between the fastening member and the support block to elastically support the fastening member.

Preferably, the pressing member is provided with a manual lever extending in the outward direction of the upper frame at the other end, wherein a gripping handle is provided at the end of the manual lever in order to manually rotate the pressing member.

Preferably, one side of the wire close to the manual lever is connected or separated by a manual switching unit, and the pressing member is characterized in that manual rotation is possible when the wire is separated by the manual switching unit.

### [Effect of Invention]

According to the present invention with reference to the above embodiment, the following effects are expectable.

First, a plurality of locking assemblies installed on the upper frame of a trailer is automatically locked and unlocked, thereby enabling simple and rapid loading and unloading operation of a container.

Second, since the locking assembly is locked and unlocked in an automatic manner, a driver may conveniently operate and a time for binding the container to the upper frame may be reduced, thereby enhancing productivity.

Third, the manual locking assembly pre-installed on the upper frame of the existing trailer may be recycled so as to easily implement automation according to the embodiment of the present invention, thereby enabling easy replacement and greatly reducing costs for replacement.

Fourth, even if the locking assembly becomes inoperable due to failure or damage, the assembly is easily switched to the manual mode so as to prevent operational loss due to not working.

Fifth, not only the first locking unit bound in the vertical direction but also the second locking unit bound in the horizontal direction may successfully undergo automation, so as to firmly secure the container to the upper frame and prevent accidents.

### [Brief Description of Drawings]

FIGS. 1a and 1b are cross-sectional views illustrating a state before and after operation of the manual locking device according to the prior art.
FIGS. 2a and 2b are cross-sectional views illustrating a state before and after operation of the automatic locking device according to the prior art.
FIG. 3 is a conceptual diagram illustrating the container binding device according to an embodiment of the present invention.
FIG. 4 is a conceptual diagram for explaining the operation principle of the container binding device according to the embodiment of FIG. 3.
FIG. 5 is a conceptual diagram for describing an example that can additionally define the embodiment of FIG. 4.
FIG. 6 is a conceptual diagram for describing an example that can additionally define the embodiment of FIG. 3.
FIG. 7 is a conceptual diagram illustrating the container binding device according to another embodiment of the present invention.
FIG. 8 is a conceptual diagram for explaining the operation principle of the container binding device according to the embodiment of FIG. 7.
FIG. 9 is a conceptual diagram illustrating the container binding device according to a further embodiment of the preset invention.
FIG. 10 is a conceptual diagram specifically illustrating the first locking unit of the present invention.
FIG. 11 is a conceptual diagram illustrating an example that may be further added to the first locking unit of the present invention.
FIG. 12 is a conceptual diagram specifically illustrating an example of the guide assembly of the present invention.
FIG. 13 is a conceptual diagram specifically illustrating another example of the guide assembly of the present invention.
FIG. 14 is a conceptual diagram specifically illustrating a further example of the guide assembly of the present invention.

### <Description of reference numerals>.

C: Container
10: Upper frame
100: Locking assembly
120: First locking unit
122: Body
124: Head member
124a: Anti-rotation protrusion
125: Bolt
126: Rotary lever
127: Binding pin
128: Horizontal anti-pushing block
128a: Anti-rotation groove
140: Second locking unit
142: Fastening member
144: Support block
150: Connection member
190: Buffer unit
192: Support member
194: High compression spring
196: Coupling member
300, 300a, 300b, 300c: Guide assembly
310: Actuator
312: Binding hole
320: Rotating member
330: Pressing member
332: Sliding groove
340: Manual lever
342: Handle
350a, 350b: Fixing member
360b, 360c: Rotary shaft member
370a, 370b, 370c: Elastic member
400: Manual switching unit
420: Second connector
440, 450: Bolt nut member
460: First connector
500a, 500b, 500c: Drive assembly
510: Guide direction switching roller
520: Automatic wire
530: Second guide roller
535: First guide roller
540: Drive link
545: Semi-automatic control roller
550: Support bracket
555: Tension control means
560: Drive motor
570: Return member
580: Drive wire
585: Semi-automatic wire
585a: First semi-automatic wire
585b: Second semi-automatic wire
590, 595: Drive member

### [Best Mode]

Advantages and features of the present invention, and methods for accomplishing the same will be apparent with reference to the embodiments described below in detail in conjunction with the accompanying drawings. However, the present invention is not limited to the embodiments disclosed below but will be implemented in various forms. Further, the embodiments are provided only for complete disclosure of the present invention and for completely explaining the full scope of the present invention to those of ordinary skill in the art to which the present invention pertains. In addition, the terminology used herein is for the purpose of describing particular embodiments only and is not intended to limit the invention. In this specification, the singular forms also include the plural forms unless specifically stated otherwise in the phrases.

Hereinafter, exemplary embodiments of the present invention will be described in detail with reference to the accompanying drawings. On the other hand, the illustration and the detailed description of configurations easily understood by those skilled in the art and functional effects achieved by the same will be briefly summarized or omitted, instead, the detailed description will be given with respect to parts relevant to the present invention.

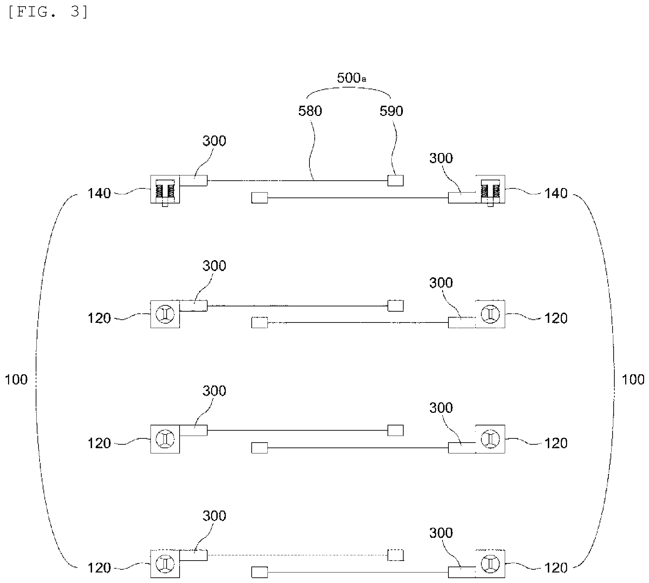

A container binding device according to an embodiment of the present invention, as shown in FIGS. 3, 7 and 9, may generally include a locking assembly 100, a guide assembly 300 and drive assemblies 500a, 500b and 500c.

First, the locking assembly 100 may be provided on an upper frame of a trailer to be fastened to or unfastened from a binder of a container. At least four locking assemblies are arranged in two rows in a length direction of the upper frame of the trailer, while the guide assembly 300 and the drive assemblies 500a, 500b and 500c are separately or simultaneously driven to perform locking or unlocking operation.

Herein, each locking assembly 100 may include a first locking unit 120 vertically bound to the container and a second locking unit 140 horizontally bound to the container.

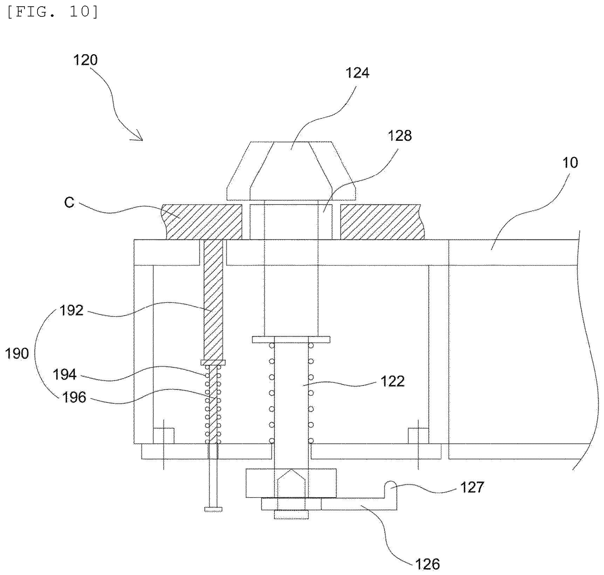

The first locking unit 120, as shown in FIG. 10, may include: a cylindrical body 122 moving up and down; a head member 124 formed on an upper end of the body 122 and fastened to or unfastened from a binder formed in a vertical direction of the container at a rotation angle; and a rotary lever 126 protruding at one side of a lower end of the body 122 to be gripped, thereby adjusting the rotation angle of the head member 124.

At this time, the body 122, the head member 124 and the rotary lever 126 to configure the first locking unit 120 may be accommodated in an enclosure, as shown in FIG. 10.

The enclosure may be provided with a buffer unit 190 for buffering and supporting the container C so as to smoothly maintain left and right balance when the container C is loaded or unloaded. That is, left and right balance is maintained during loading or unloading of the container C, so that interference due to rotation of the head member 124 of the first locking unit 120 can be prevented.

As shown in FIG. 10, the buffering unit 190 may include a support member 192 provided inside the enclosure to buffer and support the container C; a coupling member 196 extending below the support member 192 to penetrate a lower portion of the enclosure and to be coupled to the same; a high compression spring 194 interposed between a lower end of the support member 192 and a lower surface of the enclosure to elastically support the support member 192. In this case, the buffering unit 190 is not limited to the above configuration but may be of course implemented in other modifiable configurations.

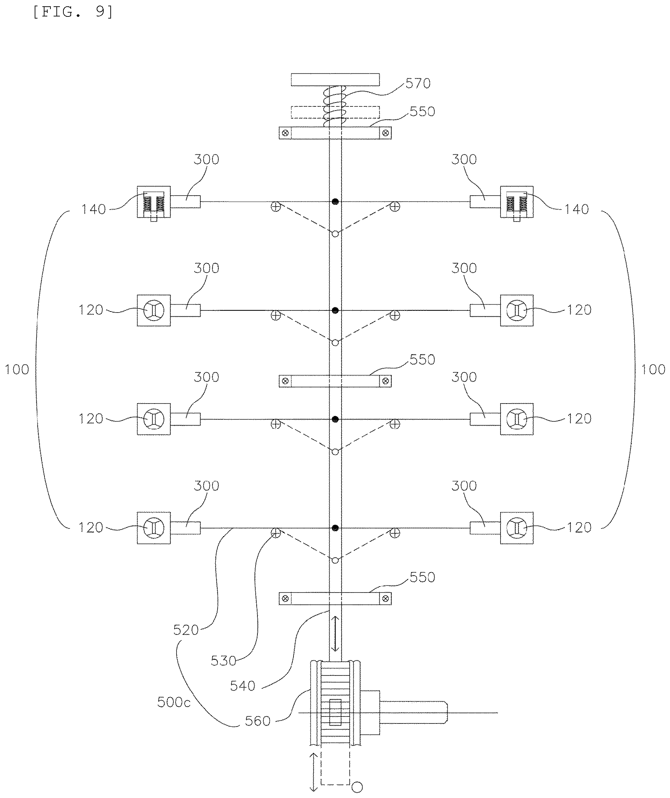

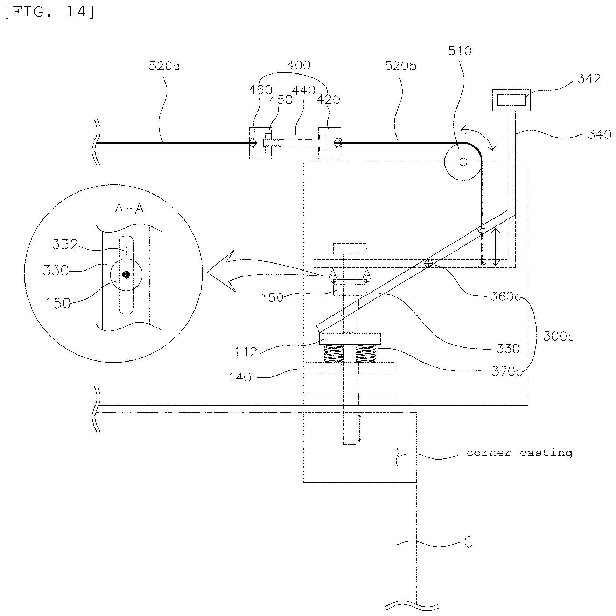

Further, the second locking unit 140, as shown in FIGS. 9 and 14, may be provided at a corner of the upper frame of the trailer so as to enable the container C to be seated and fixed on the upper frame of the trailer.

The second locking unit 140 may include: a pin type fastening member 142 fastened or unfastened through a through-hole formed at a corner casting side of the container C; and a support block 144 for supporting the fastening member 142 to be slidingly movable, wherein the container C is fastened and fixed when an end of the fastening member 142 is inserted inside the through-hole of the corner casting, while the container C is unfastened when the end of the fastening member 142 is released out of the through-hole of the corner casting.

Next, the guide assembly 300 may be connected to be interlocked with the locking assembly 100 so as to induce locking or unlocking operation of the locking assembly 100, and a detailed description thereof will be given after introduction of the drive assemblies 500a, 500b and 500c.

Then, the drive assemblies 500a, 500b and 500c may drive the guide assembly 300, thereby fastening or releasing the locking assembly 100 with respect to the container.

As shown in FIGS. 3 to 6, the drive assembly 500a according to an embodiment of the present invention may include: a drive wire 580 disposed on the upper frame 10 in a width direction, one end of which is bound to the guide assembly 300; and a drive member 590 hinge-coupled through a thickness of the upper frame 10 to be rotatable, wherein a lower end is connected to the drive wire 580 while an upper end protrudes to an upper portion of the upper frame 10.

Herein, the drive member 590 is preferably hinge-coupled to the upper frame 10 in a state being supported by a bearing, wherein a shaft portion is firmly supported by the bearing while easily conducting axial rotation.

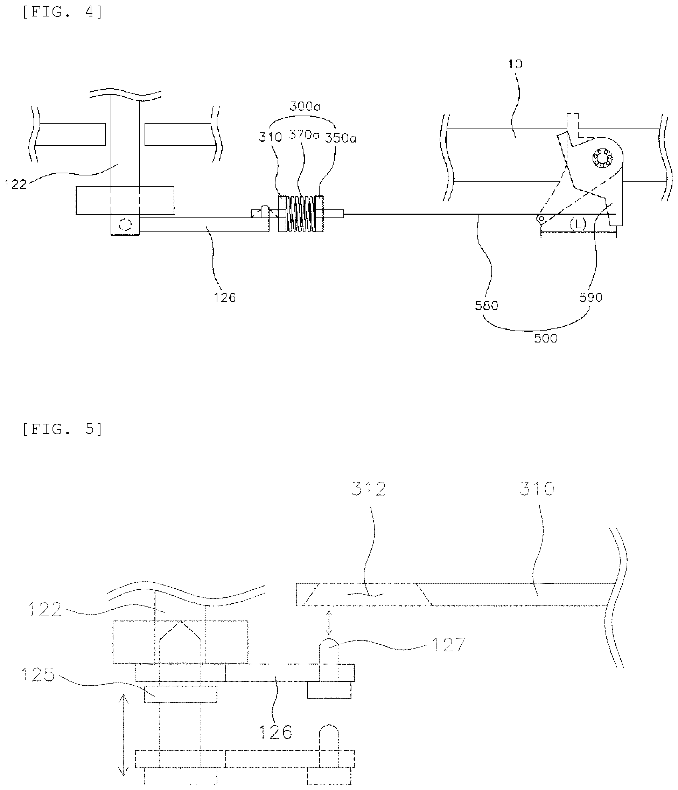

As can be seen in FIG. 4, the drive assembly 500a according to the above embodiment is characterized in that the upper end of the drive member 590 protruding upward is pressed to rotate the drive member 590 when the container is loaded on the upper frame 10, on the other hand, when the container is unloaded from the upper frame 10, the pressed drive member 590 is rotated back to its original position by an elastic member 370a of the guide assembly 300. As a result, the drive wire 580 moves in the width direction of the upper frame 10 by rotation of the drive member 590 and then drives the guide assembly 300, thereby fastening or unfastening the locking assembly 100 with respect to a binder of the container.

Meanwhile, according to the embodiment shown in FIG. 5, a connection structure between the first locking unit 120 and the guide assembly 300 is illustrated in detail. That is, it can be seen that the rotary lever 126 and an actuator 310 are bound to each other so that the first locking unit 120 and the guide assembly 300 are connected and interlocked with each other.

Further, a binding hole 312 is formed and extended in a length direction at one end of the actuator 310 so that a binding pin 127 formed at the end of the rotary lever 126 can be easily inserted. In this case, the binding hole 312 is preferably formed such that a surface facing the binding pin 127 is tapered. Therefore, when the binding pin 127 removed from the binding hole 312 is again bound thereto, the binding pin 127 may slide through the tapered slope surface to thus be easily inserted into the binding hole 312 even if an inserting position is not exactly fitted to the hole.

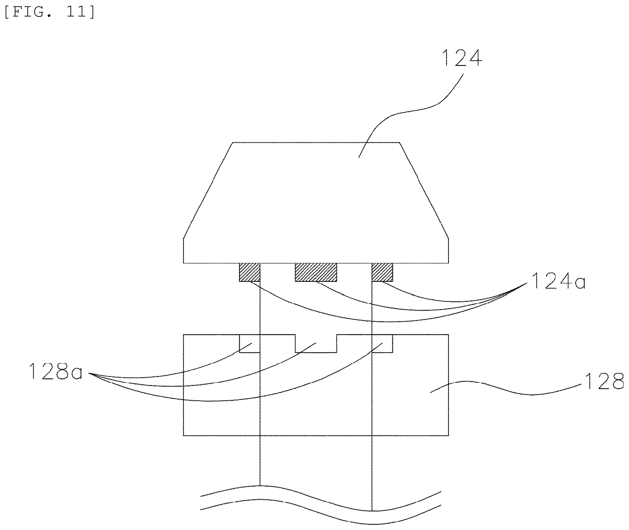

In addition, as shown in FIG. 11, the first locking unit 120 may further include a horizontal anti-pushing block 128 surrounding a portion of the body portion 122 while being spaced at a predetermined interval, wherein at least one anti-rotation protrusion 124a is formed at an adjacent portion between the body 122 and the head member 124. Further, an anti-rotation groove 128a corresponding to the anti-rotation protrusion 124a is preferably formed on an upper portion of the horizontal anti-pushing block 128.

For example, if the unused first locking unit 120 is pressed by the container, the binding pin 127 of the rotary lever 126 described above is removed from the binding hole 312. At this time, when the head member 124 and the body 122 of the first locking unit 120 rotate due to horizontal load acting on the container C, the rotary lever 126 may also rotate, hence causing position shift between the binding pin 127 and the binding hole 312. Due to this, there is a problem that the binding pin 127 in a separate state is hard to reinsert into the binding hole 312.

In other words, the horizontal anti-pushing block 128 may prevent the head member 124 and the body 122 from rotating or being pushed due to horizontal load in a state in which the first locking unit 120 is pressed by the container, thereby preventing position shift between the binding pin 127 and the binding hole 312.

Further, the horizontal anti-pushing block 128 may surround the body 122 of the first locking unit 120 while being spaced from the same in a fixed state on the enclosure, so as to mitigate impact applied directly by the container C. Therefore, it is possible to improve durability and minimize functional disorder by simply implementing a coupling structure.

In addition, as can be seen with reference to the embodiment of FIG. 5, the rotary lever 126 may be coupled to or separated from the body 122 by a bolt 125. Therefore, if necessary, the binding between the rotary lever 126 and the actuator 310 is released to prevent the first locking unit 120 and the guide assembly 300 from interlocking with each other, thereby switching automatic operation of the first locking unit 120 to manual operation. That is, when the first locking unit 120 is not used or cannot be operated due to failure and switching to manual operation is required, the manual operation becomes possible by releasing the bolt 125.

Herein, the structure for manual switching of the first locking unit 120 is not particularly limited but may of course be altered into another structure having the same purpose and effects. For example, the binding pin 127 mounted on the rotary lever 126 may be formed in a bolt shape to be coupled to or separated from an end of the rotary lever 126.

The drive member 590 may drive the locking assembly 100 in a state in which the drive member is spaced in the width direction of the upper frame 10 at a predetermined distance equal to a length of the drive wire 580.

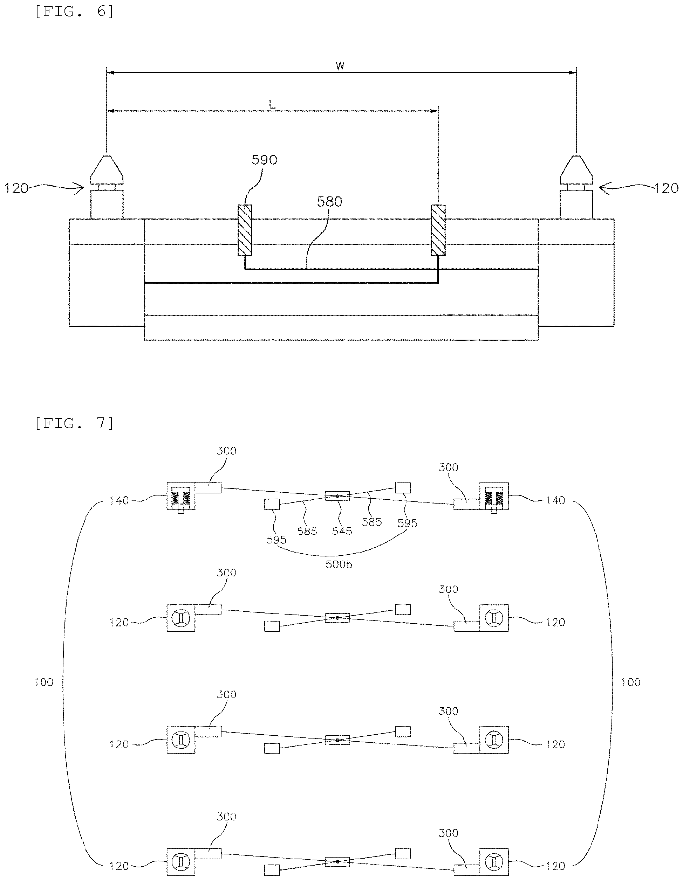

At this time, as can be seen with reference to FIGS. 3 and 6, the distance between the drive member 590 and the locking assembly 100 is spaced apart to be 1/2 or more of the width of the upper frame 10. In particular, the locking assembly 100 is preferably disposed to be as close as possible to the other locking assembly 100 facing the former assembly.

When the container is loaded, the container is inclined by centrifugal force when the corner is rotated. At this time, the outer portion facing the width direction of the upper frame 10 is lifted with a small gap.

Accordingly, if the drive member 590 is adjacent to the locking assembly 100 with which the drive member 590 is interlocked, the container is lifted and the pressed drive member 590 pressed may rotate in an unlocking direction. Accordingly, the locking assembly 100 interlocked with the drive member may also be released.

Therefore, by spacing the interlocked drive member 590 and locking assembly 100 at a predetermined distance in opposite directions to each other, it is possible to prevent the locking assembly 10 from being released even if one side of the container is lifted by centrifugal force.

Further, as shown in FIG. 6, when a distance between the locking assemblies facing each other is denoted by W and another distance between the drive member 590 and the locking assembly 100 interlocked with each other is denoted by L, L must be at least W/4, preferably W/2 or more. Furthermore, it is apparent that as L is close to W, the loaded container may have improved stability.

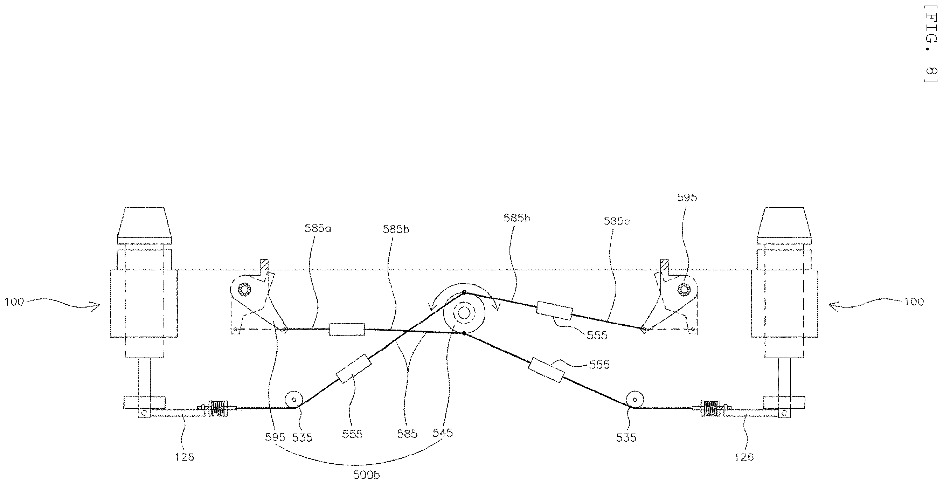

According to another embodiment of the present invention, as shown in FIGS. 7 and 8, the drive assembly 500b may include: a pair of semi-automatic wires 484 disposed in the width direction of the upper frame, one end of which is bound to the guide assembly 300; a drive member 595 hinge-coupled while penetrating through the thickness portion of the upper frame, wherein a lower end is connected to the other end of the semi-automatic wire 585 and an upper end protrudes to the upper portion of the upper frame; and a semi-automatic control roller 545 provided to rotate in the center of the width of the upper frame, which includes a pair of wire fixing means disposed at both opposite positions around the periphery of the roller in order to fix the pair of semi-automatic wires 585, respectively.

With regard to the drive assembly 500b according to the above embodiment, as shown in FIG. 8, when the container is loaded on the upper frame, the upper end of the drive member 595 protruding upward is pressed to rotate the drive member 595. On the other hand, when the container is unloaded from the upper frame, the pressed drive member 595 is rotated back to its original position by the elastic member 370a of the guide assembly 300. Therefore, the semi-automatic wire 585 moves in the width direction of the upper frame by rotation of the drive member 595, wherein the pair of semi-automatic wires 585 connected to face each other is driven simultaneously as the semi-automatic control roller 545 connected to the semi-automatic wires 585 is rotated.

That is, with regard to the drive assembly 500b according to the embodiment of FIG. 8, the pair of semi-automatic wires 585 may be operated simultaneously by the semi-automatic control roller 545 even when only one of a pair of drive members 595 connected to the paired semi-automatic wires 585, respectively, is pressed. Therefore, even if one side of the container is lifted due to corner rotation or vibration during driving and the drive member 595 at the corresponding position is free of pressing ("unpressed"), the other drive member 595 may be kept in a pressed state. The locking assemblies 100 arranged in two rows on both sides of the upper frame may be prevented from being released.

However, when the drive member 595 is free of pressing while unloading the container, simultaneously, the semi-automatic control roller 545 is rotated to its original position and, at the same time, the paired semi-automatic wires 585 are switched to the original position, thereby normally releasing the locking assembly 100.

On the other hand, the semi-automatic wire 585 positioned between the drive member 595 and the semi-automatic control roller 545 may consist of a first semi-automatic wire 585a and a second semi-automatic wire 585b, separately, as well as a length-variable tension control means 555 connected between the first semi-automatic wire 585a and the second semi-automatic wire 585b. Accordingly, locking and unlocking operation of the locking assembly 100 may be exactly implemented by controlling operation timing or the like, which are organically connected between the drive member 595, the semi-automatic wires 585 and the semi-automatic controller 545, through the tension control means 555.

In this case, the tension control means 555 may be a turnbuckle which is one of typical fastening mechanisms. The turnbuckle has a threaded rod on the left and right, and the threaded portion is connected by a common nut, wherein one male screw is right hand threaded and the other male screw is left hand threaded. Therefore, these two male screws can come close to each other by rotating the common nut while being distanced from each other by rotating the common nut backward.

In addition, a first guide roller 535, which is installed between the guide assembly 300 and the semi-automatic control roller 545 in order to guide and support the semi-automatic wire 585, may further be included. The first guide roller 535 may guide a direction of pulling and releasing the semi-automatic wire 585 toward the width direction of the upper frame.

According to another embodiment of the present invention, as shown in FIG. 9, the drive assembly 500c may further include: an automatic wire 520 disposed in the width direction of the upper frame, one end of which is bound to the guide assembly 300; a drive link 540 disposed in the center of the width of the upper frame in order to be orthogonal to the automatic wire 520 and connected to the other end of the automatic wire 520; and a drive motor 560 that reciprocates the drive link 540 in a length direction of the upper frame, thereby pulling and releasing the automatic wire 520.

With regard to the drive assembly 500c having the above-described configuration, a plurality of automatic wires 520 is simultaneously operated in conjunction with the reciprocating movement of the single drive link 540 so that the guide assembly 300 connected to the automatic wires 520 can be driven entirely.

The drive link 540 is illustrated in the form of a metal bar in FIG. 9, but is not limited thereto. Instead, a metal wire may of course be used as the drive link.

Since the drive motor 560 may be electrically controlled through a control module (not shown), a drive assembly 500c to be automatically driven can be implemented. In this case, an operation panel (not shown) for operating the control module may be installed outside or inside a trailer.

Although not shown in the embodiment of the present invention, a sensor, a control module, a warning lamp, and the like, which electrically detect and interlock with the driving of the above-described components may further be added.

For example, a sensor may be provided at a position adjacent to the drive motor 560 of the above-described drive assembly 500c in order to detect whether to operate or not, thereby indicating the state of operation. Further, another sensor may be provided at a position adjacent to the locking assembly 100 to detect a locked or unlocked state.

A signal sensed by the sensor is transmitted to the control module so as to be utilized for extended signal processing. Furthermore, the control module may further include a warning lamp electrically connected to the control module. The warning lamp may blink a color indicating a caution when the driving motor is operated, wherein different colors indicating whether the locking assembly 100 is locked or unlocked are displayed. Therefore, a driver or the worker can easily confirm the operating state of the locking assembly 100 as well as a fixed state of the container, enabling safe operation. In addition, a warning speaker for generating a warning sound when the drive motor is operating may be electrically connected to the control module.

The drive assembly 500c may further include a support bracket 550 installed on the upper frame such that the drive link 540 penetrates the support bracket; and a return member 570 provided between one end of the drive link 540 and the support bracket 550 to elastically support the drive link 540. Owing to this configuration, the drive link 540 is restricted from being drastically moved by the drive motor 500, thereby being moved more flexibly.

Further, when the drive link 540 having moved in a direction opposite to the elastic direction of the return member 570 moves back to the original position, the drive link can return to the original position without a driving power of the drive motor 560, thereby saving electric power. Further, the drive link 540 can be returned more accurately without leaving the original position by the support bracket 550.

Meanwhile, a second guide roller 530 installed between the guide assembly 300 and the drive link 540 to be arranged on the same line as the automatic wire 520, thereby guiding and supporting the automatic wire 520, may further be included. The second guide roller 530 may guidea direction in which the automatic wire is pulled and released to the width direction of the upper frame.

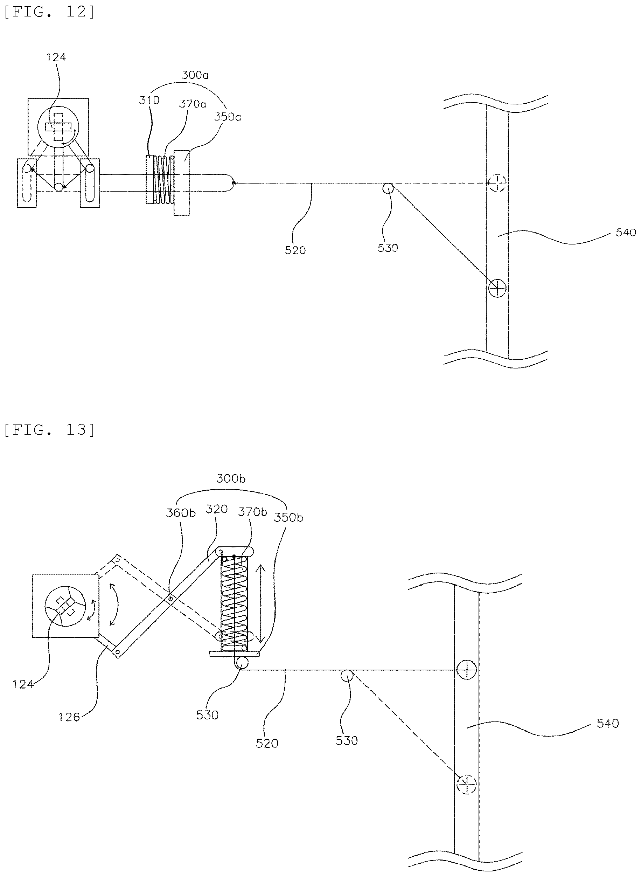

According to the first embodiment shown in FIG. 12, the guide assembly 300a operated by the drive assembly 500c may include: an actuator 310 that is bound to the rotary lever 126 of the first locking unit 120 at one end and is connected to the automatic wire 520 at the other end; a fixing member 350a fixed to the upper frame to be spaced apart from the actuator 410 at a predetermined interval, and having a sliding hole, through which the other end of the actuator 310 or the automatic wire 520 penetrates; and an elastic member 370a interposed between the actuator 310 and the fixing member 350a to elastically support the actuator 350a.

Referring to FIG. 12, the operation principle of the guide assembly 300a according to the first embodiment can be understood. As the automatic wire 520 is pulled and released according to the reciprocating movement of the drive link 540, the actuator 310 connected to the automatic wire 520 is reciprocated to rotate the rotary lever 126 of the first locking unit 120 bound to one end of the actuator 310. As a result, the body 122 and the head member 124 of the first locking unit 120 interlocking with the rotary lever may perform locking and unlocking operation.

As shown in FIG. 13, the guide assembly 300b according to a second embodiment may include: a rotating member 320 that is bound to the rotary lever 126 of the first locking unit 120 at one end and is connected to the automatic wire 520 at the other end; a rotary shaft member 360b for supporting one side of the rotating member 320 in order to be rotatable at a predetermined radius in accordance with movement of the automatic wire 520; a fixing member 350b fixed to the upper frame to be spaced apart from the rotary shaft member 360b at a predetermined interval, and having a sliding hole, through which the automatic wire 520 penetrates; and an elastic member 370b interposed between the other end of the rotating member 320 and the fixing member 350b to elastically support the rotating member 320.

The guide assembly 300b according to the second embodiment can be understood with reference to FIG. 13. The automatic wire 520 is pulled or released by the reciprocating movement of the drive link 540, so that the rotating member 320 connected to the automatic wire 520 may be rotated at a predetermined radius. As a result, the rotary lever 126 of the first locking unit 120 bound to one end of the rotating member 320 rotates and enables the body 122 and the head member 124 of the first locking unit to perform locking and unlocking operation.

As shown in FIG. 14, the guide assembly 300c according to a third embodiment may include: a pressing member 330 that is bound to press or release a fastening member 142 of the second locking unit 140 at one end and is connected to the automatic wire 520 at the other end; a rotary shaft member 360c for supporting one side of the pressing member 330 in order to be rotatable at a predetermined radius in accordance with movement of the automatic wire 520; and an elastic member 370c interposed between the fastening member 142 and the support block 144 to elastically support the fastening member 142.

The guide assembly 300c according to the third embodiment can be understood with reference to FIG. 14. The wires 520a and 520b are pulled and released by the reciprocating movement of the drive link so that the pressing member 330 connected to the wires 520a and 520b may be rotated at a predetermined radius. As a result, the fastening member 142 of the second locking unit 140 is pressed or released by one end of the pressing member 330, enabling an end of the fastening member 142 to be inserted into or removed from the corner casting.

In this case, in order to connect the pressing member 330 and the fastening member 142, a connection member 150 may protrude from the head of the fastening member 142 by a predetermined length. Such a connection member 150 may prevent the pressing member 330 from being separated from the fastening member 142.

As shown in an enlarged state in FIG. 14, the other end of the pressing member 330 may include a sliding groove 332 through which the connection member 150 is slidably inserted, thereby smoothly rotating the pressing member while reciprocating the fastening member 142.

On the other hand, the elastic member 370c illustrated in FIG. 14 is interposed between the fastening member 142 and the support block 144, but is not limited thereto. That is, the elastic member may be arranged in various forms at positions included in the range of the guide assembly 300c. For example, the elastic member may be interposed between the pressing member 330 and the fastening member 142 as shown in FIG. 14, otherwise, may be interposed between a handle 343 of a manual lever 340 described later and the upper frame, thereby achieving the same functions.

In addition, according to an example that may be further added in the third embodiment, a manual lever 340 extending in the outward direction of the upper frame may be provided at the other end of the pressing member 330. At the end of the manual lever 340, a grippable handle 342 may be provided to manually rotate the pressing member 330.

At this time, one side of the wire520a or 520b in close proximity to the manual lever 340 may be connected or separated by a manual switching unit 400, and the pressing member 330 may be manually rotatable when the wires 520a and 520b are separated by the manual switching unit 400.

In other words, since the wires 520a and 520b are separated by the manual switching unit 400, the pressing member 330 can be operated completely independently from the drive assembly 500c, and may also be manually operated by operation of the manual lever 340.

As shown in FIG. 14, the manual switching unit 400 may include: a first connector 460 connected to one 520a of the separated wires; a second connector 420 connected to the other wire 520b; and bolt nut members 440 and 450 detachably coupled to the first connector 460 and the second connector 420, respectively. That is, the first connector 460 and the second connector 420 are connected to or separated from each other by screwing or releasing the bolt nut members 440 and 450, thereby enabling manual switching of the pressing member 330.

According to the embodiments of the present invention described above, the following effects will be expected.

First, a plurality of locking assemblies installed on the upper frame of a trailer is automatically locked and unlocked, thereby enabling simple and rapid loading and unloading operation of a container.

Second, since the locking assembly is locked and unlocked in an automatic manner, a driver may conveniently operate and a time for binding the container to the upper frame may be reduced, thereby enhancing productivity.

Third, the manual locking assembly pre-installed on the upper frame of the existing trailer may be recycled so as to easily implement automation according to the embodiment of the present invention, thereby enabling easy replacement and greatly reducing costs for replacement.

Fourth, even if the locking assembly becomes inoperable due to failure or damage, the assembly is easily switched to the manual mode so as to prevent operational loss due to not working ('down time').

Fifth, not only the first locking unit bound in the vertical direction but also the second locking unit bound in the horizontal direction may successfully undergo automation, so as to firmly secure the container to the upper frame and prevent accidents.

The foregoing has broadly outlined the features and technical advantages of the present invention in order that the appended claims of the invention can be better understood. Those skilled in the art will appreciate that the present invention may be embodied in other specific forms without changing the technical spirit or essential features of the present invention. Therefore, it should be understood that the embodiments described above are exemplary in all respects and not restrictive. The scope of the invention is specified by the following claims rather than the above description, and all changes or modifications derived from the claims and their equivalents should be construed as being included in the scope of the invention.

## Claims

1. A container-binding device, comprising:
at least four locking assemblies arranged in two rows in a length direction on an upper frame of a trailer and fastened to or unfastened from a binder of a container;
a guide assembly connected to the locking assemblies in an interlocking manner to induce fastening or unfastening operation of the locking assemblies; and
a drive assembly disposed between the locking assemblies arranged in two rows in order to drive the guide assembly.

2. The binding device according to claim 1, wherein each of the locking assemblies includes:
a cylindrical body moving up and down;
a head member formed at an upper end of the body and fastened to or unfastened from a binder formed in a vertical direction of the container along a rotation angle; and
a first locking unit protruding from one side of a lower end of the body to be grippable and having a rotary lever to adjust the rotation angle of the head member.

3. The biding device according to claim 2, wherein the locking assembly further includes:
a pin type fastening member fastened to or unfastened from a through-hole formed in a corner casting of the container; and
a second locking unit having a support block to slidingly and movably support the fastening member

4. The binding device according to claim 2, wherein the rotary lever is provided with a binding pin at an end thereof, which is inserted into and released from a binding hole formed at one end of the guide assembly, wherein the binding hole is extended in a length direction to facilitate insertion of the binding pin.

5. The binding device according to claim 4, wherein the first locking unit further includes:
a horizontal anti-pushing block surrounding a portion of the body while being spaced at a predetermined interval;
at least one anti-rotation protrusion at an adjacent portion of the body and the head member; and
an anti-rotation groove to be inserted into the corresponding anti-rotation protrusion on an upper portion of the horizontal anti-pushing block.

6. The binding device according to claim 3, wherein the drive assembly includes:
a drive wire disposed on the upper frame in a width direction, one end of which is bound to the guide assembly; and
a drive member hinge-coupled to rotate while penetrating through a thickness portion of the upper frame, wherein a lower end is connected to the drive wire and an upper end protrudes to the upper portion of the upper frame.

7. The binding device according to claim 6, wherein the drive member drives the locking assembly in a state in which the drive member is spaced in the width direction of the upper frame at a distance equal to a length of a link member,
wherein the drive member and the locking assembly are spaced and arranged such that a distance therebetween becomes at least 1/2 of a width of the upper frame.

8. The binding device according to claim 3, wherein the drive assembly includes:
a pair of semi-automatic wires disposed in the width direction of the upper frame, one end of which is bound to the guide assembly;
a drive member hinge-coupled while penetrating through the thickness portion of the upper frame, wherein a lower end is connected to the other end of the semi-automatic wire and an upper end protrudes to the upper portion of the upper frame; and
a semi-automatic control roller provided to rotate in the center of the width of the upper frame, which includes a pair of wire fixing means disposed at both opposite positions around the periphery of the roller in order to fix the pair of semi-automatic wires, respectively.

9. The binding device according to claim 8, wherein the semi-automatic wire disposed between the drive member and the semi-automatic control roller consists of a first semi-automatic wire and a second semi-automatic wire, and
a length-variable tension control means is connected between the first semi-automatic wire and the second semi-automatic wire.

10. The binding device according to claim 8, wherein the guide assembly further includes a first guide roller installed between the guide assembly and the semi-automatic control roller to guide and support the semi-automatic wire, wherein the first guide roller leads a direction of pulling and releasing the semi-automatic wire in the width direction of the upper frame.

11. The binding device according to claim 3, wherein the drive assembly includes:
an automatic wire disposed in the width direction of the upper frame, one end of which is bound to the guide assembly;
a drive link disposed in the center of the width of the upper frame in order to be orthogonal to the automatic wire and provided with a wire fixing means to fix the center of the automatic wire; and
a drive motor that reciprocates the drive link in a length direction of the upper frame, thereby pulling and releasing the automatic wire.

12. The binding device according to claim 11, wherein the guide assembly further includes:
a second guide roller installed between the guide assembly and the drive link to guide and support the automatic wire, wherein the second guide roller leads a direction of pulling and releasing the automatic wire in the width direction of the upper frame.

13. The binding device according to any one of claims 6 to 12, wherein the guide assembly includes:
an actuator that is bound to the rotary lever of the first locking unit at one end and is connected to the wire at the other end (hereinafter, the "wire" is any one of the drive wire, the semi-automatic wire or the automatic wire, and the "wire" mentioned later is also interpreted in the same way);
a fixing member fixed to the upper frame to be spaced apart from the actuator at a predetermined interval, and having a sliding hole, through which the other end of the actuator or the wire penetrates; and
an elastic member interposed between the actuator and the fixing member to elastically support the actuator.

14. The binding device according to any one of claims 6 to 12, wherein the guide assembly includes:
a rotating member that is bound to the rotary lever of the first locking unit at one end and is connected to the wire at the other end;
a rotary shaft member for supporting one side of the rotating member in order to be rotatable at a predetermined radius in accordance with movement of the wire;
a fixing member fixed to the upper frame to be spaced apart from the rotary shaft member at a predetermined interval, and having a sliding hole, through which the wire penetrates; and
an elastic member interposed between the other end of the rotating member and the fixing member to elastically support the rotating member.

15. The binding device according to any one of claims 6 to 12, wherein the guide assembly includes:
a pressing member that is bound for pressing or releasing a fastening member of the second locking unit at one end and is connected to the wire at the other end;
a rotary shaft member for supporting one side of the pressing member in order to be rotatable at a predetermined radius in accordance with movement of the wire; and
an elastic member interposed between the fastening member and the support block to elastically support the fastening member.

16. The binding device according to claim 15, wherein the pressing member is provided with a manual lever extending in the outward direction of the upper frame at the other end, wherein a gripping handle is provided at the end of the manual lever in order to manually rotate the pressing member.

17. The binding device according to claim 16, wherein one side of the wire close to the manual lever is connected or separated by a manual switching unit, and
the pressing member is **characterized in that** manual rotation is possible when the wire is separated by the manual switching unit.
